# FASCICULE DE BREVET EUROPEEN

(11) **EP 4 012 214 B1**
(45) Date de publication et mention de la délivrance du brevet: **12.07.2023**
(21) Numéro de dépôt: 21209264.7
(22) Date de dépôt: 19.11.2021
(51) Int. Cl.: F16D 41/067, F16H 57/04

(54) **ROUE LIBRE MUNIE D'UNE BARRIERE DE LUBRIFICATION A GEOMETRIE VARIABLE**
FREILAUF MIT EINER SCHMIERBARRIERE MIT VARIABLER GEOMETRIE
FREE WHEEL PROVIDED WITH A LUBRICATION BARRIER WITH VARIABLE GEOMETRY

(30) Priorité: 10.12.2020 FR 2012965
(43) Date de publication de la demande: 15.06.2022
(73) Titulaire: Airbus Helicopters, 13725 Marignane Cedex (FR)
(72) Inventeur: ROBERT, Sébastien, 13760 SAINT CANNAT (FR); ESCOFFIER, Adrien, 13240 SEPTEMES LES VALLONS (FR)
(74) Mandataire: GPI Brevets

(56) Documents cités:
- JP-A- 2020 051 490
- US-A1- 2013 199 886

## Description

La présente invention concerne une roue libre munie d'une barrière de lubrification à géométrie variable. L'invention se situe ainsi dans le domaine technique de la lubrification d'une roue libre.

Une roue libre est usuellement munie d'une partie menante, d'une partie menée, et d'un système de liaison en rotation pour lier en rotation la partie menante et le partie menée dans des conditions particulières.

A l'arrêt ou tant que la partie menée tourne plus vite que la partie menante autour d'un axe de rotation, la roue libre est dans un mode de fonctionnement dénommé « désynchronisé » ou « désengagé » par commodité. La partie menante ne transmet pas un couple moteur à la partie menée et inversement. La partie menée et la partie menante sont désolidarisées en rotation autour de l'axe de rotation. Dans ce mode fonctionnement désengagé, la partie menée et la partie menante présentent l'une par rapport à l'autre un degré de liberté en rotation autour de l'axe de rotation.

Par contre, dans un mode de fonctionnement dénommé « synchronisé » ou « engagé », la partie menante et la partie menée tournent à la même vitesse et conjointement autour de l'axe de rotation.

Pour passer d'un mode de fonctionnement à un autre, la roue libre est munie d'au moins un organe de liaison interposé entre la partie menante et la partie menée. L'organe de liaison lie en rotation la partie menante et la partie menée dans le mode de fonctionnement engagé. Dans ce mode de fonctionnement engagé, l'organe de liaison permet de supprimer le degré de liberté en rotation précédemment évoqué entre la partie menante et le partie menée.

Selon un exemple, une roue libre comporte un organe de liaison muni d'au moins un cliquet.

Selon un exemple, une roue libre à galets peut comprendre un premier arbre ayant une partie périphérique munie de rampes. A l'inverse, un deuxième arbre comporte une face cylindrique au regard radialement des rampes. Par suite, des organes de liaison de type galets sont portés par une cage et sont disposés dans l'espace séparant radialement les rampes et la face cylindrique. De part et d'autre des galets, la roue libre peut comprendre deux paliers, chaque palier étant interposé radialement entre le premier arbre et le deuxième arbre. Durant le mode de fonctionnement désengagé, les galets sont chacun disposés au pied d'une rampe et ne lient pas en rotation le premier arbre et le deuxième arbre. Lors du passage vers le mode de fonctionnement synchronisé, les galets sont déplacés vers le sommet des rampes et se coincent temporairement entre les rampes et la face cylindrique. Le premier arbre et le deuxième arbre deviennent solidaires en rotation.

Le premier arbre peut représenter la partie menante alors que le deuxième arbre représente la partie menée. L'inverse est aussi possible.

Par ailleurs, le premier arbre peut être un arbre externe qui entoure un arbre interne représenté par le deuxième arbre, ou le deuxième arbre peut être un arbre externe qui entoure un arbre interne représenté par le premier arbre.

Au sein d'une installation motrice d'un giravion, la partie menante d'une roue libre peut être reliée à un moteur alors que la partie menée de la roue libre peut être reliée à un rotor. La roue libre peut être agencée au sein du moteur, ou au sein d'une boîte de transmission de puissance voire au sein d'une chaîne cinématique reliant un moteur à la boîte de transmission de puissance. Par exemple, la boîte de transmission de puissance peut comprendre un système d'entrée mécanique de transmission de couple par moteur, chaque système d'entrée mécanique de transmission de couple incluant une roue libre. Chaque roue libre peut désynchroniser un moteur et le rotor par exemple au démarrage ou en cas d'une défaillance du moteur.

Quels que soient son agencement et sa nature, une roue libre peut être lubrifiée pour optimiser sa durée de vie. Durant le mode de fonctionnement engagé, la roue libre peut avoir besoin d'être lubrifiée au niveau des zones de contact. Ces zones de contact peuvent notamment comprendre, sur une roue libre à galets, les galets, les rampes, la face cylindrique et des organes des paliers le cas échéant. Durant le mode de fonctionnement désengagé, la roue libre peut s'échauffer, par exemple suite au mouvement des galets éventuels à haute vitesse. Le système de lubrification vise alors à évacuer des calories pour refroidir la roue libre.

Selon une première réalisation connue, la roue libre est graissée.

Selon une deuxième réalisation, les zones de contact, notamment les galets dans le cadre d'une roue libre à galets, baignent dans un bain d'huile. Noyer les organes de liaison de la roue libre dans de l'huile est efficace pour limiter l'usure de cette roue libre durant le mode de fonctionnement engagé. A contrario, durant le mode de fonctionnement désengagé, l'huile elle-même peut être source d'échauffement par un effet de barbotage.

Une troisième réalisation connue consiste à arroser les zones de contact avec de l'huile. Par exemple, un gicleur achemine de l'huile au sein de l'arbre interne. Cet arbre interne comporte alors au moins un orifice radial pour diriger l'huile entre la partie menante et la partie menée par effet centrifuge, et donc vers les zones de contact de la roue libre. L'huile est ensuite évacuée en dehors de la roue libre par débordement en traversant, par exemple, les deux paliers disposés longitudinalement de part et d'autre des galets.

Cette troisième réalisation permet ainsi de faire circuler une faible quantité de lubrifiant durant le mode de fonctionnement désengagé pour évacuer des calories en dehors de la roue libre. Par contre, la troisième réalisation ne permet pas de noyer les zones de contact durant le mode de fonctionnement engagé.

Pour y remédier, la roue libre peut comprendre au moins un rebord pour délimiter un espace qui forme une « piscine » à lubrifiant contenant les galets. Le rebord n'obture pas totalement un passage en communication fluidique avec l'espace de liaison. Par exemple, un rebord peut être réalisé avec une entretoise épaulée ou avec un déflecteur intégré dans un desdits paliers. Durant le mode de fonctionnement engagé, l'huile s'accumule dans cet espace avant de s'en échapper par débordement au dessus du rebord. Le dimensionnement du rebord est délicat pour permettre de faire suffisamment baigner les zones de contact dans l'huile durant le mode de fonctionnement engagé en évitant à l'inverse un effet de barbotage dans le mode de fonctionnement désengagé.

Le document US 2013/199886 A1 décrit un système muni d'un boîtier. Le boîtier loge deux moyeux et deux ensembles de rouleaux. En outre, le système comporte un mécanisme à friction.

Le document JP 2020 051490 A décrit un système à roue libre muni d'un dispositif de lubrification ayant au moins un joint.

La présente invention a alors pour objet de proposer une roue libre alternative visant à être intéressante aussi bien durant le mode de fonctionnement engagé que durant le mode de fonctionnement désengagé.

L'invention vise ainsi une roue libre comprenant une partie menante et une partie menée qui sont mobiles en rotation autour d'un axe de rotation, ladite roue libre comprenant au moins un organe de liaison en rotation agencé dans un espace de liaison, un tronçon de liaison mené de la partie menée entourant un tronçon de liaison menant de la partie menante, ledit espace de liaison étant situé radialement par rapport à l'axe de rotation entre ledit tronçon de liaison menant et ledit tronçon de liaison mené, ladite roue libre comportant au moins un dispositif de lubrification acheminant un fluide de lubrification dans l'espace de liaison.

La roue libre comprend au moins une barrière à géométrie variable en fonction d'une vitesse de rotation de ladite partie menante autour de l'axe de rotation, ladite barrière étant disposée radialement entre la partie menante et la partie menée et longitudinalement contre l'espace de liaison, ladite barrière étant solidaire en rotation du tronçon de liaison menant.

La partie menante transmet ainsi un couple à la partie menée durant le mode de fonctionnement engagé via le ou les organes de liaison. A l'inverse, la partie menée est mobile en rotation indépendamment de la partie menante dans le mode de fonctionnement désengagé. Le ou les organes de liaison ne lient alors plus en rotation la partie menante et la partie menée. En particulier, dans le mode de fonctionnement désengagé, la partie menante peut être immobile en rotation autour de l'axe de rotation alors que la partie menée est au contraire mobile en rotation autour de l'axe de rotation. Durant le mode de fonctionnement engagé, la partie menée et la partie menante peuvent être conjointement mobiles en rotation autour de l'axe de rotation.

Le dispositif de lubrification achemine le fluide de lubrification dans l'espace de liaison aussi bien durant le mode de fonctionnement engagé que durant le mode de fonctionnement désengagé.

Par suite, l'invention propose une barrière qui s'étend durant le mode de fonctionnement engagé, et par exemple à partir d'une vitesse de rotation supérieure à un seuil, sous l'effet d'une force centrifuge pour atteindre une forme étendue dans laquelle la barrière représente une barrière de grandes dimensions à l'encontre du fluide de lubrification présent dans l'espace de liaison. A l'inverse la barrière se rétracte dans une forme rétractée durant le mode de fonctionnement désengagé, et par exemple en présence d'une vitesse de rotation inférieure ou égale au seuil précité, pour favoriser l'évacuation du fluide de lubrification en dehors de l'espace de liaison.

Selon un exemple et notamment dans le cadre d'une roue libre mise en mouvement par un moteur, ce seuil peut être établi pour que la barrière soit dans une forme étendue dès que le moteur fonctionne selon un régime de ralenti.

Au sein d'un giravion muni d'un rotor, par exemple au sein d'un hélicoptère comprenant un rotor principal, ce seuil peut être établi pour que la barrière soit dans une forme rétractée lorsque le rotor est en autorotation.

La barrière représente donc une barrière de lubrification, à surface de blocage variable, installée sur l'arbre interne de la roue libre, en l'occurrence sur la partie menante.

Durant le mode de fonctionnement engagé, la barrière est en effet mise en rotation avec la partie menante. La barrière se déforme sous l'effet de la force centrifuge. La barrière devient alors active dans une forme étendue tendant à obturer localement et au moins partiellement l'espace de liaison. La lubrification des organes de liaison de la roue libre se trouvant dans cet espace de liaison est ainsi optimisée.

Durant le mode de fonctionnement désengagé, la barrière n'est plus déformée. La barrière est dans une forme rétractée. La barrière libère l'espace de liaison et permet de réduire ainsi le niveau du fluide de lubrification présent dans l'espace de liaison.

La barrière permet donc d'assurer la lubrification sensiblement en noyant tous les éléments de la roue libre présents dans l'espace de liaison durant le mode de fonctionnement engagé, en limitant l'échauffement par abaissement du niveau de fluide de lubrification dans l'espace de liaison durant le mode de fonctionnement désengagé.

La roue libre peut comprendre une ou plusieurs des caractéristiques additionnelles qui suivent, prises seules ou en combinaison.

Selon une possibilité, ladite barrière peut obturer au moins partiellement un passage situé radialement entre la partie menante et la partie menée sous l'effet de la force centrifuge lorsque la barrière est en rotation autour de l'axe de rotation à une vitesse supérieure à un seuil, ladite barrière libérant ledit passage en l'absence d'une dite force centrifuge.

La barrière peut alors rendre localement l'espace de liaison sensiblement étanche, au fluide de lubrification, selon une direction et durant le mode de fonctionnement engagé, en s'étendant de la partie menée à la partie menante. A l'inverse, la barrière n'obture plus un passage durant le mode de fonctionnement désengagé en se rétractant.

Selon une possibilité compatible avec la précédente, ladite barrière peut comporter un socle mobile en rotation autour de l'axe de rotation avec le tronçon de liaison menant, ladite barrière comprenant un séparateur mobile par rapport au socle sous l'effet de la force centrifuge.

Le terme séparateur désigne un organe qui peut s'étendre, entre la partie menante et la partie menée, sous l'effet d'une force centrifuge ou se rétracter.

La barrière est ainsi rendue solidaire de la partie menante par son socle, le séparateur pouvant se déployer pour étendre la surface faisant barrière au fluide de lubrification durant le mode de fonctionnement engagé.

Le séparateur peut avoir une forme symétrique par rapport à l'axe de rotation.

Alternativement, la barrière peut s'étendre sur un arc de cercle inférieur à 360 degrés. Par exemple, le socle peut comprendre un anneau qui s'étend radialement de la partie menante à la partie menée, cet anneau présentant au moins une ouverture obturée par un séparateur dans le mode de fonctionnement engagé.

Le séparateur peut être articulé au socle. Alternativement, le séparateur peut être lié au socle par un pied formé en une matière déformable élastiquement, de l'élastomère par exemple. Par exemple, le socle peut être rigide, métallique à titre illustratif, le séparateur ayant une membrane déformable souple solidaire d'un pied souple fixé au socle. Selon une autre alternative, le pied peut faire office de socle.

Selon une possibilité compatible avec les précédentes, la barrière peut comporter un organe de rappel exerçant un effort sur le séparateur.

L'organe de rappel peut exercer un effort sur le séparateur selon un sens contraire à la force centrifuge. L'organe de rappel peut favoriser le retour à la forme rétractée suite au passage du mode de fonctionnement engagé au mode de fonctionnement désengagé. Un tel organe de rappel peut comprendre un ressort par exemple ou un équivalent.

Selon une possibilité compatible avec les précédentes, la barrière peut comporter un matériau du groupe du polytétrafluoroéthylène.

Selon une possibilité compatible, la barrière peut comporter un matériau du groupe des élastomères.

Un tel matériau présente l'avantage d'être souple et de pouvoir se déformer élastiquement sous l'effet de la force centrifuge.

Selon une possibilité compatible avec les précédentes, ledit au moins un organe de liaison peut comporter un élément roulant coopérant avec une rampe de la partie menante et une face cylindrique de la partie menée.

La roue libre est alors par exemple une roue libre à galets comprenant plusieurs galets, éventuellement portés par une cage. Cependant, la roue libre peut être d'un autre type sans sortir du cadre de l'invention.

Selon une possibilité compatible avec les précédentes, l'espace de liaison peut s'étendre longitudinalement le long de l'axe de rotation d'un premier côté jusqu'à un second côté, ladite roue libre comprenant une unique dite barrière disposée longitudinalement contre le premier côté de l'espace de liaison, ladite roue libre comprenant une ouverture mettant en communication fluidique ledit second côté et un milieu extérieur.

Ainsi, l'espace de liaison n'est pas totalement fermé ce qui permet de pouvoir renouveler le fluide de lubrification dans l'espace de liaison.

L'ouverture et le dispositif de lubrification peuvent être dimensionnés pour maintenir un niveau de fluide de lubrification souhaité dans l'espace de liaison durant le mode de fonctionnement engagé.

Alternativement, il est possible d'avoir deux barrières agencées longitudinalement de part et d'autre de l'espace de liaison.

Selon une possibilité compatible avec les précédentes, ladite partie menée peut comporter une protubérance annulaire agencée en regard du second côté, ladite partie menante comportant une extrémité obturée disposée dans la partie menée, ladite ouverture étant disposée entre ladite protubérance et ladite extrémité obturée.

Cette caractéristique tend à optimiser l'ouverture.

Selon une possibilité compatible avec les précédentes, ladite roue libre peut comporter au moins un palier interposé dans l'espace de liaison entre la partie menante et la partie menée.

Ainsi, un palier, par exemple de type roulement à billes, peut aussi être lubrifié.

Selon une possibilité compatible avec les précédentes, le tronçon de liaison menant peut être creux, ledit tronçon de liaison menant comportant au moins un canal mettant en communication fluidique l'espace de liaison et un milieu interne disposé dans le tronçon de liaison menant, ledit dispositif de lubrification comprenant un injecteur injectant ledit fluide de lubrification dans ledit milieu interne.

Le terme « injecteur » est à interpréter au sens large en désignant un organe permettant d'introduire le fluide de lubrification dans le milieu interne. Par exemple, l'injecteur peut comprendre un gicleur, un simple tuyau...

Selon une possibilité compatible avec les précédentes, ledit tronçon de liaison menant peut comporter un rebord qui s'étend radialement dans le milieu interne d'une paroi de ce tronçon de liaison menant vers l'axe de rotation sans atteindre cet axe de rotation, ledit milieu interne s'étendant longitudinalement selon l'axe de rotation dudit rebord à une extrémité obturée de la partie menante.

Le rebord vise à favoriser l'alimentation en fluide de lubrification de l'espace de liaison via le ou les passages.

Outre une roue libre, l'invention vise aussi un véhicule comprenant cette roue libre.

Par exemple, le véhicule peut comporter un moteur et un rotor participant au déplacement du véhicule, la partie menante de la roue libre étant fonctionnellement reliée à un arbre du moteur et ladite partie menée de la roue libre étant reliée au rotor.

L'invention et ses avantages apparaîtront avec plus de détails dans le cadre de la description qui suit avec des exemples donnés à titre illustratif en référence aux figures annexées qui représentent :
la figure 1, une vue montrant une roue libre selon l'invention dans le mode de fonctionnement engagé,
la figure 2, une vue montrant un exemple de barrière,
la figure 3, une vue montrant une roue libre selon l'invention dans le mode de fonctionnement désengagé.

Les éléments présents dans plusieurs figures distinctes sont affectés d'une seule et même référence.

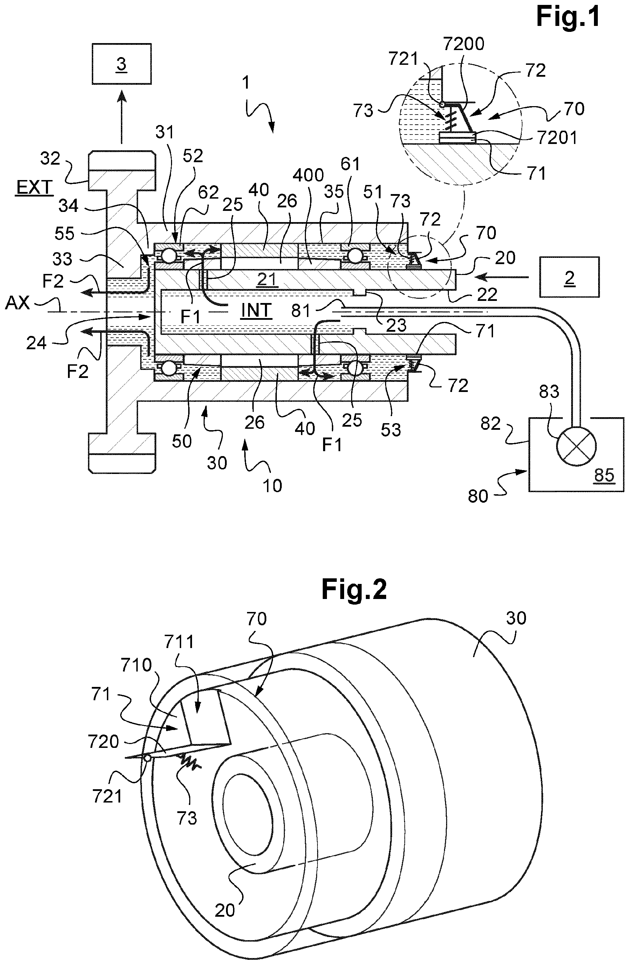

La figure 1 présente une roue libre 10 selon l'invention.

La roue libre 10 est pourvue d'une partie menante 20 et d'une partie menée 30 qui sont chacune mobiles en rotation autour d'un même axe de rotation AX. La partie menante 20 peut être une pièce monolithique ou peut comprendre plusieurs pièces fixées les unes ou autres. La partie menée 30 peut être une pièce monolithique ou peut comprendre plusieurs pièces fixées les unes ou autres. Au moins un tronçon de la partie menante 20 ou de la partie menée 30 peut présenter une symétrie par rapport à l'axe de rotation AX.

La partie menante 20 peut se trouver radialement au moins partiellement entre l'axe de rotation AX et la partie menée 30. Dès lors, la partie menante 20 peut être entourée par la partie menée 30. En particulier, un tronçon de liaison mené 31 de la partie menée 30 entoure au moins partiellement un tronçon de liaison menant 21 de la partie menante 20.

Par exemple, le tronçon de la liaison menant 21 peut être creux. Eventuellement, le tronçon de la liaison menant 21 peut s'étendre jusqu'à une extrémité 24 obturée par un fond, cette extrémité 24 étant localisée dans la partie menée 30.

Indépendamment de la position relative de la partie menante 20 vis-à-vis de la partie menée 30, la roue libre 10 peut être agencée au sein de tout type d'architectures.

Par exemple, la roue libre 10 peut être agencée au sein d'un véhicule 1. En particulier, la roue libre 10 peut être disposée au sein d'un giravion. Selon un exemple, la partie menante 20 peut être reliée par une chaîne cinématique à un moteur 2 alors que la partie menée 30 peut être reliée par une autre chaîne cinématique à un rotor 3.

Quel que soit son agencement, la roue libre 10 comprend au moins un organe de liaison en rotation 40 pour d'une part lier en rotation, autour de l'axe de rotation AX, la partie menante 20 et la partie menée 30 durant un mode de fonctionnement engagé et, d'autre part, pour désolidariser en rotation, autour de l'axe de rotation AX, la partie menante 20 et la partie menée 30 durant un mode de fonctionnement désengagé.

Indépendamment du nombre d'organes de liaison en rotation 40, chaque organe de liaison en rotation 40 est agencé dans un espace qui est dénommé « espace de liaison 50 » par commodité et en raison du rôle tenu par chaque organe de liaison en rotation 40. Cet espace de liaison 50 s'étend radialement, à savoir par rapport à l'axe de rotation AX et donc perpendiculairement à cet axe de rotation AX, entre la partie menante 20 et la partie menée 30. En particulier, l'espace de liaison 50 est disposé entre le tronçon de liaison menant 21 et le tronçon de liaison mené 31.

Par exemple, au moins un voire le cas échéant chaque organe de liaison en rotation peut prendre la forme d'un élément roulant 40, éventuellement disposé dans une cage 400. Un tel élément roulant 40 peut être du type d'un galet cylindrique par exemple.

Dès lors, la partie menante 20 peut comprendre une rampe 26 par élément roulant 40. Chaque rampe 26 peut présenter une face inclinée ou courbe, qui n'est par exemple pas tangente à un cercle centré sur l'axe de rotation. A l'inverse, la partie menée 30 peut comprendre une face cylindrique 35 agencée en regard des rampes 26. Chaque élément roulant 40 peut alors être libre de se déplacer entre une rampe 26 et la face cylindrique 35 durant le mode de fonctionnement désengagé et peut être coincé entre une rampe 26 et la face cylindrique 35 durant le mode de fonctionnement engagé.

Indépendamment des caractéristiques précédentes, la roue libre 10 peut comporter au moins un palier 61,62 de guidage en rotation, par exemple entre la partie menante 20 et la partie menée 30. Par exemple, un palier 61,62 de guidage en rotation peut prendre la forme d'un roulement à billes, par exemple muni d'une bague interne et d'une bague externe.

Chaque palier 61, 62 peut être positionné dans l'espace de liaison 50 et peut s'étendre radialement de la partie menante 20 jusqu'à la partie menée 30.

Selon l'exemple illustré, un premier palier 61 est positionné longitudinalement, à savoir selon l'axe de rotation AX entre un premier côté 51 de l'espace de liaison 50 et le ou les organes de liaison en rotation 40.

Un deuxième palier 62 de guidage est disposé au niveau d'un second côté 52 de l'espace de liaison 50. Ainsi, chaque organe de liaison en rotation 40 est agencé longitudinalement entre le premier palier 61 et le deuxième palier 62.

D'autres systèmes de guidage sont envisageables. Par exemple, il est possible d'agencer deux roulements en O disposés côte à côte, ces deux roulements étant agencés au niveau du premier ou du second côté uniquement.

Indépendamment des caractéristiques précédentes, la roue libre 10 est munie d'un dispositif de lubrification 80. Ce dispositif de lubrification 80 comprend un fluide de lubrification 85. Par exemple, ce fluide de lubrification 85 comporte de l'huile.

Par exemple, ce fluide de lubrification 85 peut être acheminé par un injecteur 81 dans un milieu interne INT délimité par la partie menante 20. Selon l'exemple illustré, le dispositif de lubrification 80 peut comprendre une pompe 83 disposée dans un réservoir 82 contenant le fluide de lubrification 85. La pompe 83 dirige, via une liaison fluidique, le fluide de lubrification 85 vers l'injecteur 81.

Indépendamment de cet aspect, l'injecteur 81 injecte le fluide de lubrification dans le milieu interne INT. Par exemple, le milieu interne INT est délimité par le tronçon de liaison menant 21. Par exemple, le milieu interne INT est fermé longitudinalement selon un sens par l'extrémité 24.

Eventuellement, le tronçon de liaison menant 21 comporte un rebord 23 délimitant partiellement le milieu interne INT. Par exemple, ce rebord 23 prend la forme d'une excroissance annulaire interne qui s'étend radialement dans le milieu interne INT, à partir d'une paroi 22 cylindrique du tronçon de liaison menant 21 et vers l'axe de rotation AX. En raison de la force centrifuge exercée en utilisation, un tel rebord 23 peut contenir le fluide de lubrification 85 dans le milieu interne INT, conjointement avec l'extrémité 24.

Pour transférer le fluide de lubrification 85 dans l'espace de liaison 50, le tronçon de liaison menant 21 peut comporter au moins un canal 25 mettant en communication fluidique le milieu interne INT et l'espace de liaison 50. Chaque canal 25 peut traverser la paroi 22 de part en part voire radialement. Eventuellement, deux canaux 25 débouchent longitudinalement de part et d'autre des organes de liaison en rotation 40, par exemple vers la cage 400. Le cas échéant, la cage 400 peut comporter des perçages susceptibles d'être en communication fluidique avec les canaux et l'espace de liaison. Selon une possibilité, au moins un canal 25 peut traverser une rampe 26 pour déboucher sur un organe de liaison en rotation 40.

Par ailleurs, la roue libre 10 comprend au moins une barrière 70 disposée radialement, au regard de l'axe de rotation AX, entre la partie menante 20 et la partie menée 30. La barrière 70 est disposée, longitudinalement, au niveau d'un côté de l'espace de liaison 50. Cette barrière 70 présente une géométrie variable sous l'effet de la vitesse de rotation de la partie menante 20, et en particulier d'une force centrifuge, pour obturer un passage 53 présent entre la partie menante 20 et la partie menée 30 durant le mode de fonctionnement engagé.

Dès lors, la barrière 70 est solidaire en rotation du tronçon de liaison menant 21. De la sorte, la barrière 70 est mobile en rotation, autour de l'axe de rotation AX, et sujette à une force centrifuge au moins durant le mode de fonctionnement engagé. La barrière 70 est, au contraire, à l'arrêt lorsque la partie menante 20 est aussi à l'arrêt durant le mode de fonctionnement désengagé.

Par exemple, la barrière 70 comporte un socle 71 qui est fixé au tronçon de liaison menant 21. Selon un exemple, le socle 71 comporte une bague emmanchée autour du tronçon de liaison menant 21.

De plus, la barrière 70 comprend un séparateur 72 mobile par rapport au socle 71 sous l'effet de ladite force centrifuge. Le séparateur 72 peut être fixé, voire articulé, au socle 71. Selon l'exemple de la figure 1, le séparateur 72 peut comporter une paroi tronconique 7201 prolongée par un pied 7202 qui est fixé au socle 71. Sous l'effet de la force centrifuge, la paroi tronconique 7201 tend à s'aplatir en se déformant, à l'instar d'un parapluie que l'on ouvre, et ainsi tend à obturer le passage 53. A l'inverse, en l'absence d'une telle force centrifuge, la paroi tronconique se rapproche de la partie menante 20, à l'instar d'un parapluie que l'on ferme et libère le passage 53.

Le séparateur 72 peut éventuellement comporter un élément massique 721 déporté favorisant l'aplatissement de la paroi tronconique sous l'effet de la force centrifuge.

Selon un exemple, la barrière peut être du type d'un parapluie. La paroi tronconique 7201 peut comporter des baleines portant une membrane formant le séparateur, les baleines étant articulées à des tiges elles mêmes articulées à un coulisseau mobile en translation sur le socle.

La figure 2 illustre un autre exemple de barrière 70. Le socle 71 comporte, selon cet exemple, un disque 710 qui s'étend de la partie menante 20 à la partie menée 30. Le disque 710 comporte au moins une encoche 711 qui est apte à former un passage 53. Dès lors, le séparateur 72 comporte un volet 720 apte à obturer l'encoche 711 sous l'effet de la force centrifuge. Par exemple, le volet 720 comporte un élément massique 721.

Indépendamment de cet aspect et en référence à nouveau à la figure 1, la barrière 70 peut comporter un organe de rappel 73 agissant sur le séparateur 72. Selon l'exemple illustré sur la figure 1, l'organe de rappel 73 s'étend entre la paroi tronconique 7201 et le pied 7202. L'organe de rappel 73 pourrait aussi s'étendre entre le séparateur et le socle ou encore entre le séparateur et la partie menante.

Selon un autre aspect, la barrière 70 peut être en tout ou partie réalisé en un matériau du groupe du polytétrafluoroéthylène ou du groupe des élastomères. Selon l'exemple de la figure 1, le séparateur peut être en élastomère et le socle peut être réalisé dans une matière métallique ou plastique

Selon un autre aspect, la roue libre 10 peut, selon l'exemple illustré, comporter seulement une barrière 70. Par exemple, cette unique barrière 70 est disposée au niveau du premier côté 51 de l'espace de liaison 50. Dès lors, la roue libre 10 peut comprendre une ouverture 55 mettant en communication fluidique le second côté 52 et un milieu extérieur EXT situé à l'extérieur de la roue libre 10.

Par exemple, la partie menée 30 comporte une protubérance 33 annulaire au regard du second côté 52. Selon l'exemple illustré, la protubérance 33 est accolée à un épaulement interne 34. Cet épaulement interne 34 peut bloquer le deuxième palier 62 longitudinalement en synergie avec la cage 400.

L'ouverture 55 peut alors prendre la forme d'une ouverture annulaire disposée longitudinalement entre la protubérance 33 et l'extrémité 24 obturée de la partie menante 20, voire radialement au regard de l'épaulement interne 34.

L'ouverture 55 peut être positionnée de manière à favoriser l'évacuation du fluide de lubrification par le passage 53 durant le mode fonctionnement désengagé.

Selon une variante non illustrée, il est envisageable d'avoir par exemple deux barrières 70.

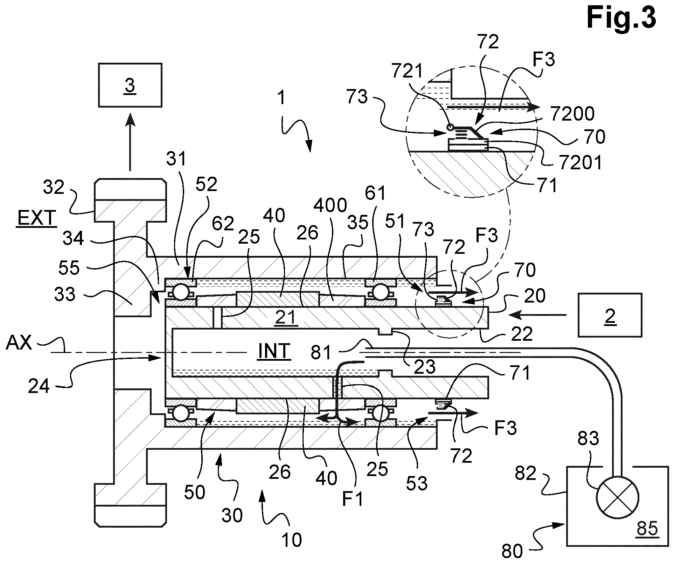

Les figures 1 et 3 illustrent le fonctionnement de la roue libre 10.

Selon la figure 1, la roue libre 10 est dans le mode de fonctionnement engagé.

Dès lors, la barrière 70 illustrée est mise en rotation conjointement avec la partie menante 20. Cette barrière 70 se déforme sous l'effet de la force centrifuge et atteint la forme étendue illustrée dans laquelle la barrière 70 obture le passage 53.

L'injecteur 81 achemine le fluide de lubrification 85 dans le milieu interne INT. Le fluide de lubrification 85 traverse les canaux 25 et pénètre dans l'espace de liaison 50 selon la flèche F1.

La barrière 70 obturant l'espace de liaison 50 au niveau du second côté 52, le fluide de lubrification 85 tend à s'accumuler dans l'espace de liaison 50 et à noyer non seulement le ou les organes de liaison en rotation 40 mais aussi les paliers 61, 62 éventuels. Le fluide de lubrification 85 s'échappe doucement de l'espace de liaison 50 par débordement, selon les flèches F2, via l'ouverture 55 pour rejoindre par exemple le réservoir 82. Pour favoriser l'effet piscine, la protubérance 33 de la partie menée 30 peut s'étendre longitudinalement au regard de l'espace de liaison 50. Cette ouverture 55 peut être dimensionnée et positionnée afin de pouvoir noyer de manière adéquate l'espace de liaison 50

Durant le mode de fonctionnement désengagé illustré sur la figure 3, la partie menante 20 peut être à l'arrêt. La barrière 70 n'est plus soumise à la force centrifuge et se rétracte, par exemple aidé par l'organe de rappel 73 éventuel, pour atteindre une forme rétractée. Dans cette position rétractée, la barrière 70 n'obture plus le passage 53. Dès lors, l'espace de liaison 50 peut être vidé partiellement par ce passage 53 selon les flèches F3. Le ou les organes de liaison en rotation 40 mais aussi les paliers 61, 62 éventuels ne sont plus noyés dans le fluide de lubrification 85.

En particulier, le fluide de lubrification 85 peut le cas échéant s'accumuler contre la face cylindrique 35 entre les paliers 61, 62 sous l'effet de la force centrifuge, et selon l'exemple illustré entre les bagues externes des paliers 61, 62. En présence d'une ouverture 55, cette ouverture 55 peut être positionnée de manière à être radialement plus loin de la face cylindrique 35 que le passage 53 afin que le fluide de lubrification 85 soit évacué par ce passage 53. Comme illustré sur la figure 3, les organes de liaison en rotation 40 mais aussi les paliers 61, 62 ne baignent alors pas dans le fluide de lubrification 85.

Naturellement, la présente invention est sujette à de nombreuses variations tant qu'elles restent dans l'esprit comme défini par les revendications ajoutées.

## Revendications

1. Roue libre (10) comprenant une partie menante (20) et une partie menée (30) qui sont mobiles en rotation autour d'un axe de rotation (AX), ladite roue libre (10) comprenant au moins un organe de liaison en rotation (40) agencé dans un espace de liaison (50), un tronçon de liaison mené (31) de la partie menée (30) entourant un tronçon de liaison menant (21) de la partie menante (20), ledit espace de liaison (50) étant situé radialement par rapport à l'axe de rotation (AX) entre ledit tronçon de liaison menant (21) et ledit tronçon de liaison mené (31), ladite roue libre (10) ayant au moins un dispositif de lubrification (80) acheminant un fluide de lubrification (85) dans l'espace de liaison (50),
**caractérisée en ce que** ladite roue libre (10) comprend au moins une barrière (70) à géométrie variable en fonction d'une vitesse de rotation de ladite partie menante (20) autour de l'axe de rotation (AX), ladite barrière (70) étant disposée radialement entre la partie menante (20) et la partie menée (30) et longitudinalement contre l'espace de liaison (50), ladite barrière (70) étant solidaire en rotation du tronçon de liaison menant (21).

2. Roue libre selon la revendication 1,
**caractérisée en ce que** ladite barrière (70) obture au moins partiellement un passage (53) situé radialement entre la partie menante (20) et la partie menée (30) sous l'effet de la force centrifuge lorsque la barrière (70) est en rotation autour de l'axe de rotation (AX) à une vitesse supérieure à un seuil, ladite barrière (70) libérant ledit passage (53) en l'absence d'une dite force centrifuge.

3. Roue libre selon l'une quelconque des revendications 1 à 2,
**caractérisée en ce que** ladite barrière (70) comporte un socle (71) mobile en rotation autour de l'axe de rotation (AX) avec le tronçon de liaison menant (21), ladite barrière (70) comprenant un séparateur (72) mobile par rapport au socle (71) sous l'effet de la force centrifuge.

4. Roue libre selon la revendication 3,
**caractérisée en ce que** ladite barrière (70) comporte un organe de rappel (73) exerçant un effort sur le séparateur (72).

5. Roue libre selon l'une quelconque des revendications 1 à 4,
**caractérisée en ce que** ladite barrière (70) comporte un matériau du groupe du polytétrafluoroéthylène.

6. Roue libre selon l'une quelconque des revendications 1 à 5,
**caractérisée en ce que** ladite barrière (70) comporte un matériau du groupe des élastomères.

7. Roue libre selon l'une quelconque des revendications 1 à 6,
**caractérisée en ce que** ledit au moins un organe de liaison comporte un élément roulant (40) coopérant avec une rampe (26) de la partie menante (20) et une face cylindrique (35) de la partie menée (30).

8. Roue libre selon l'une quelconque des revendications 1 à 7,
**caractérisée en ce que** l'espace de liaison (50) s'étend longitudinalement le long de l'axe de rotation (AX) d'un premier côté (51) jusqu'à un second côté (52), ladite roue libre (10) comprenant une unique dite barrière (70) disposée longitudinalement contre le premier côté (51) de l'espace de liaison (50), ladite roue libre (10) comprenant une ouverture (55) mettant en communication fluidique ledit second côté (52) et un milieu extérieur (EXT).

9. Roue libre selon la revendication 8,
**caractérisée en ce que** ladite partie menée (30) comporte une protubérance (33) annulaire agencée en regard du second côté (52) et ladite partie menante (20) comporte une extrémité (24) obturée disposée dans la partie menée (30), ladite ouverture (55) étant disposée entre ladite protubérance (33) et ladite extrémité (24) obturée.

10. Roue libre selon l'une quelconque des revendications 1 à 9,
**caractérisée en ce que** ladite roue libre (10) comporte au moins un palier (61, 62) interposé dans l'espace de liaison (50) entre la partie menante (20) et la partie menée (30).

11. Roue libre selon l'une quelconque des revendications 1 à 10,
**caractérisée en ce que** ledit tronçon de liaison menant (21) est creux, ledit tronçon de liaison menant (21) comportant au moins un canal (25) mettant en communication fluidique l'espace de liaison (50) et un milieu interne (INT) disposé dans le tronçon de liaison menant (21), ledit dispositif de lubrification (80) comprenant un injecteur (81) injectant ledit fluide de lubrification (85) dans ledit milieu interne (INT).

12. Roue libre selon la revendication 11,
**caractérisée en ce que** ledit tronçon de liaison menant (21) comporte un rebord (23) qui s'étend radialement dans le milieu interne (INT) d'une paroi (22) de ce tronçon de liaison menant (21) vers l'axe de rotation (AX) sans atteindre cet axe de rotation, ledit milieu interne (INT) s'étendant longitudinalement selon l'axe de rotation (AX) dudit rebord (23) à une extrémité (24) obturée de la partie menante (20).

13. Véhicule (1),
**caractérisé en ce que** ledit véhicule (1) comporte une roue libre (10) selon l'une quelconque des revendications 1 à 12.

14. Véhicule selon la revendication 13,
**caractérisé en ce que** ledit véhicule (1) comporte un moteur (2) et un rotor (3) participant au déplacement du véhicule (1), la partie menante (20) est fonctionnellement reliée à un arbre du moteur (2) et ladite partie menée (30) étant reliée au rotor (3).

## Patentansprüche

1. Freilauf (10) mit einem treibenden Teil (20) und einem angetriebenen Teil (30), die um eine Drehachse (AX) drehbar sind, wobei der Freilauf (10) mindestens ein Drehverbindungsglied (40) aufweist, das in einem Verbindungsraum (50) angeordnet ist, wobei ein angetriebener Verbindungsabschnitt (31) des angetriebenen Teils (30) einen antreibenden Verbindungsabschnitt (21) des antreibenden Teils (20) umgibt, wobei der Verbindungsraum (50) radial zur Drehachse (AX) zwischen dem antreibenden Verbindungsabschnitt (21) und dem angetriebenen Verbindungsabschnitt (31) angeordnet ist, wobei der Freilauf (10) mindestens eine Schmiervorrichtung (80) aufweist, die ein Schmierfluid (85) in den Verbindungsraum (50) leitet,
**dadurch gekennzeichnet, dass** der Freilauf (10) mindestens eine Barriere (70) mit in Abhängigkeit von einer Drehgeschwindigkeit des antreibenden Teils (20) um die Drehachse (AX) variabler Geometrie umfasst, wobei die Barriere (70) radial zwischen dem antreibenden Teil (20) und dem angetriebenen Teil (30) und in Längsrichtung gegen den Verbindungsraum (50) angeordnet ist, wobei die Barriere (70) drehfest mit dem antreibenden Verbindungsabschnitt (21) verbunden ist.

2. Freilauf nach Anspruch 1,
**dadurch gekennzeichnet, dass** die Barriere (70) einen Durchgang (53), der sich radial zwischen dem antreibenden Teil (20) und dem angetriebenen Teil (30) befindet, zumindest teilweise unter der Wirkung der Zentrifugalkraft verschließt, wenn sich die Barriere (70) um die Drehachse (AX) mit einer Geschwindigkeit dreht, die größer als ein Schwellenwert ist, wobei die Barriere (70) in Abwesenheit einer solchen Zentrifugalkraft den Durchgang (53) freigibt.

3. Freilauf nach einem der Ansprüche 1 bis 2,
**dadurch gekennzeichnet, dass** die Barriere (70) einen Sockel (71) aufweist, der mit dem antreibenden Verbindungsabschnitt (21) um die Drehachse (AX) drehbar ist, und dass die Barriere (70) einen Separator (72) aufweist, der unter der Wirkung der Zentrifugalkraft in Bezug auf den Sockel (71) beweglich ist.

4. Freilauf nach Anspruch 3,
**dadurch gekennzeichnet, dass** die Barriere (70) ein Rückstellorgan (73) umfasst, das eine Kraft auf den Separator (72) ausübt.

5. Freilauf nach einem der Ansprüche 1 bis 4,
**dadurch gekennzeichnet, dass** die Barriere (70) ein Material aus der Gruppe des Polytetrafluorethylens umfasst.

6. Freilauf nach einem der Ansprüche 1 bis 5,
**dadurch gekennzeichnet, dass** die Barriere (70) ein Material aus der Gruppe der Elastomere umfasst.

7. Freilauf nach einem der Ansprüche 1 bis 6,
**dadurch gekennzeichnet, dass** das mindestens eine Verbindungsorgan ein rollendes Element (40) umfasst, das mit einer Rampe (26) des antreibenden Teils (20) und einer zylindrischen Fläche (35) des angetriebenen Teils (30) zusammenwirkt.

8. Freilauf nach einem der Ansprüche 1 bis 7,
**dadurch gekennzeichnet, dass** sich der Verbindungsraum (50) in Längsrichtung entlang der Drehachse (AX) von einer ersten Seite (51) bis zu einer zweiten Seite (52) erstreckt, wobei der Freilauf (10) eine einzige besagte Barriere (70) umfasst, die in Längsrichtung gegen die erste Seite (51) des Verbindungsraums (50) angeordnet ist, wobei der Freilauf (10) eine Öffnung (55) umfasst, die die zweite Seite (52) und eine äußere Umgebung (EXT) in Fluidverbindung bringt.

9. Freilauf nach Anspruch 8,
**dadurch gekennzeichnet, dass** der angetriebene Teil (30) einen ringförmigen Vorsprung (33) aufweist, der gegenüber der zweiten Seite (52) angeordnet ist, dass der antreibende Teil (20) ein verschlossenes Ende (24) aufweist, das in dem angetriebenen Teil (30) angeordnet ist, und dass die Öffnung (55) zwischen dem Vorsprung (33) und dem verschlossenen Ende (24) angeordnet ist.

10. Freilauf nach einem der Ansprüche 1 bis 9,
**dadurch gekennzeichnet, dass** der Freilauf (10) mindestens ein Lager (61, 62) aufweist, das in den Verbindungsraum (50) zwischen dem antreibenden Teil (20) und dem angetriebenen Teil (30) eingefügt ist.

11. Freilauf nach einem der Ansprüche 1 bis 10,
**dadurch gekennzeichnet, dass** der antreibende Verbindungsabschnitt (21) hohl ist, dass der antreibende Verbindungsabschnitt (21) mindestens einen Kanal (25) aufweist, der den Verbindungsraum (50) und eine in dem antreibenden Verbindungsabschnitt (21) angeordnete innere Umgebung (INT) in Fluidverbindung bringt, wobei die Schmiervorrichtung (80) einen Injektor (81) aufweist, der das Schmierfluid (85) in die innere Umgebung (INT) injiziert.

12. Freilauf nach Anspruch 11,
**dadurch gekennzeichnet, dass** der antreibende Verbindungsabschnitt (21) einen Rand (23) aufweist, der sich von einer Wand (22) dieses antreibenden Verbindungsabschnitts (21) in der inneren Umgebung (INT) radial zur Drehachse (AX) hin erstreckt, ohne diese Drehachse zu erreichen, wobei sich die innere Umgebung (INT) in Längsrichtung entlang der Drehachse (AX) von dem Rand (23) zu einem verschlossenen Ende (24) des treibenden Teils (20) hin erstreckt.

13. Fahrzeug (1),
**dadurch gekennzeichnet, dass** das Fahrzeug (1) einen Freilauf (10) nach einem der Ansprüche 1 bis 12 aufweist.

14. Fahrzeug nach Anspruch 13,
**dadurch gekennzeichnet, dass** das Fahrzeug (1) einen Motor (2) und einen Rotor (3) aufweist, die an der Bewegung des Fahrzeugs (1) beteiligt sind, wobei der antreibende Teil (20) funktionell mit einer Welle des Motors (2) verbunden ist und der angetriebene Teil (30) mit dem Rotor (3) verbunden ist.

## Claims

1. Freewheel (10) comprising a driving part (20) and a driven part (30) which are rotatable around an axis of rotation (AX), said freewheel (10) comprising at least one rotationally connecting member (40) arranged in a connecting space (50), a driven connecting section (31) of the driven part (30) surrounding a driving connecting section (21) of the driving part (20), said connecting space (50) being located radially with respect to the axis of rotation (AX) between said driving connecting section (21) and said driven connecting section (31), said freewheel (10) having at least one lubricating device (80) conveying a lubricating fluid (85) into the connecting space (50),
**characterized in that** said freewheel (10) comprises at least one barrier (70) with variable geometry depending on a speed of rotation of said driving part (20) about the axis of rotation (AX), said barrier (70) being arranged radially between the driving part (20) and the driven part (30) and longitudinally against the connecting space (50), said barrier (70) being integral in rotation with the driving connecting section (21).

2. Freewheel according to Claim 1,
**characterized in that** said barrier (70) at least partially closes off a passage (53) located radially between the driving part (20) and the driven part (30) under the effect of centrifugal force when the barrier (70) is rotating about the axis of rotation (AX) at a speed greater than a threshold, said barrier (70) releasing said passage (53) in the absence of said centrifugal force.

3. Freewheel according to any one of Claims 1 to 2,
**characterized in that** said barrier (70) comprises a base (71) which is rotatable about the axis of rotation (AX) with the driving connecting section (21), said barrier (70) comprising a separator (72) which is movable relative to the base (71) under the effect of centrifugal force.

4. Freewheel according to Claim 3,
**characterized in that** said barrier (70) comprises a return member (73) exerting a force on the separator (72).

5. Freewheel according to any one of Claims 1 to 4,
**characterized in that** said barrier (70) comprises a material from the polytetrafluoroethylene group.

6. Freewheel according to any one of Claims 1 to 5,
**characterized in that** said barrier (70) comprises a material from the elastomer group.

7. Freewheel according to any one of Claims 1 to 6,
**characterized in that** said at least one connecting member comprises a rolling element (40) cooperating with a ramp (26) of the driving part (20) and a cylindrical face (35) of the driven part (30).

8. Freewheel according to any one of Claims 1 to 7,
**characterized in that** the connecting space (50) extends longitudinally along the axis of rotation (AX) from a first side (51) to a second side (52), said freewheel (10) comprising a single said barrier (70) arranged longitudinally against the first side (51) of the connecting space (50), said freewheel (10) comprising an opening (55) that brings said second side (52) into fluidic communication with an external environment (EXT).

9. Freewheel according to Claim 8,
**characterized in that** said driven part (30) comprises an annular protuberance (33) arranged opposite the second side (52) and said driving part (20) comprises a closed end (24) arranged in the driven part (30), said opening (55) being arranged between said protuberance (33) and said closed end (24).

10. Freewheel according to any one of Claims 1 to 9,
**characterized in that** said freewheel (10) comprises at least one bearing (61, 62) interposed in the connecting space (50) between the driving part (20) and the driven part (30).

11. Freewheel according to any one of Claims 1 to 10,
**characterized in that** said driving connecting section (21) is hollow, said driving connecting section (21) comprising at least one channel (25) bringing the connecting space (50) into fluidic communication with an internal environment (INT) disposed in the driving connecting section (21), said lubricating device (80) comprising an injector (81) injecting said lubricating fluid (85) into said internal environment (INT).

12. Freewheel according to Claim 11,
**characterized in that** said driving connecting section (21) comprises a flange (23) which extends radially into the internal environment (INT) from a wall (22) of this driving connecting section (21) towards the axis of rotation (AX), without reaching this axis of rotation, said internal environment (INT) extending longitudinally along the axis of rotation (AX) from said flange (23) to a closed end (24) of the driving part (20).

13. Vehicle (1),
**characterized in that** said vehicle (1) comprises a freewheel (10) according to any one of Claims 1 to 12.

14. Vehicle according to Claim 13,
**characterized in that** said vehicle (1) comprises an engine (2) and a rotor (3) participating in the movement of the vehicle (1), the driving part (20) being functionally connected to a shaft of the engine (2) and said driven part (30) being connected to the rotor (3).
